# EUROPÄISCHE PATENTSCHRIFT

(11) **EP 2 129 445 B1**
(45) Veröffentlichungstag und Bekanntmachung des Hinweises auf die Patenterteilung: **16.05.2012**
(21) Anmeldenummer: 07847495.4
(22) Anmeldetag: 29.11.2007
(51) Int. Cl.: B01D 45/16, B01D 50/00, B01D 46/52, B04C 3/04

(54) **FILTER ZUR REINIGUNG EINES FLUIDS**
FILTER FOR CLEANING A FLUID
FILTRE POUR ÉPURER UN FLUIDE

(30) Priorität: 23.03.2007 DE 20704476 U
(43) Veröffentlichungstag der Anmeldung: 09.12.2009
(73) Patentinhaber: Mann + Hummel GmbH, 71638 Ludwigsburg (DE)
(72) Erfinder: GREIF, Volker, 67376 Harthausen (DE)
(86) Internationale Anmeldenummer: PCT/EP2007/062978
(87) Internationale Veröffentlichungsnummer: WO 2008/116508

(56) Entgegenhaltungen:
- EP-A- 0 558 091
- WO-A-2005/107924
- DE-A1-102005 031 058
- GB-A- 890 058
- GB-A- 2 324 484
- US-A- 4 537 608

## Beschreibung

### Technisches Gebiet

Die Erfindung bezieht sich auf einen Filter zur Reinigung eines Fluids, insbesondere eines gasförmigen Fluids, nach dem Oberbegriff des Anspruches 1.

### Stand der Technik

Aus der GB 2 324 484 A ist ein Trägheitsabscheider mit zwei Stufen bekannt, wobei jede Stufe eine Anordnung von Zentrifugalseparatoren aufweist, die jeweils axiale Strömungswege definieren.

Aus der WO 2005/107924 A2 ist eine Luftfilteranordnung bekannt, bei welcher verschiedene Vorabscheider-Ausgestaltungen am zentralen Gehäuse befestigt werden können.

In der DE 20 2005 009 989 U1 wird ein Luftfilter beschrieben, der in den Ansaugtrakt einer Brennkraftmaschine integriert wird, um die heranzuführende Verbrennungsluft einer Filtration zu unterziehen. Der Luftfilter ist mehrteilig aufgebaut und umfasst ein in einem Filtergehäuse angeordnetes Filterelement, dem ein Zyklonvorabscheider als Vorfilter vorgeschaltet und ein Feinfilter nachgeordnet ist. Der Zyklonvorabscheider, der die Aufgabe hat, in der Rohluft enthaltene gröbere Schmutzpartikel abzuscheiden, umfasst eine Vielzahl von parallel zueinander angeordneten, röhrenförmigen Strömungskanälen gleichen Durchmessers. Diese Strömungskanäle münden in einen dem Filterelement vorgelagerten Vorraum im Filtergehäuse, in den eine sich radial nach außen erstreckende Austragöffnung eingebracht ist, über die abgesonderte Schmutzpartikel aus dem Vorabscheidergehäuse entfernt werden können.

Die mit identischer Geometrie ausgebildeten Strömungskanäle im Zyklonvorabscheider sind an einen bestimmten Nenndurchsatz angepasst. Unterschiedliche Durchsatzparameter erfordern daher eine entsprechende Anpassung des Zyklonvorabscheiders. Eine Verkleinerung der Durchmesser der Strömungskanäle im Zyklonvorabscheider verbessert zwar die Reinigungswirkung, zugleich wird aber der Nenndurchsatz verringert.

### Offenbarung der Erfindung

Der Erfindung liegt die Aufgabe zugrunde, den Wirkungsgrad eines mit einem Zyklonvorabscheider versehenen Filters mit einfachen konstruktiven Maßnahmen zu erhöhen.

Diese Aufgabe wird erfindungsgemäß mit den Merkmalen des Anspruches 1 gelöst. Die Unteransprüche geben zweckmäßige Weiterbildungen an.

Bei dem erfindungsgemäßen Filter zur Reinigung eines Fluids ist dem in dem Filtergehäuse angeordneten Filterelement ein Zyklonvorabscheider vorgeschaltet, über den das Fluid geleitet wird, bevor das vorgereinigte Fluid nachfolgend das Filterelement durchströmt. Der Zyklonvorabscheider umfasst mindestens zwei Zyklonzellen unterschiedlichen Durchmessers. Als Zyklonzellen werden Einzelzyklone verstanden, die jeweils mit einer Einströmöffnung und einer Abströmöffnung und einem die Einström- und Abströmöffnung verbindenden Strömungskanal versehen sind. In den erfindungsgemäßen Filter sind nun mindestens zwei derartiger Zyklonzellen integriert, die einen unterschiedlichen Durchmesser aufweisen. Auf diese Weise kann der vorhandene Bauraum besser ausgenutzt werden, als dies bei Zyklonzellen gleichen Durchmessers der Fall ist. Außerdem wird der mittlere Abscheidegrad durch den Einsatz kleinerer Zyklone im Vergleich zu Zyklonen größeren, einheitlichen Durchmessers angehoben, da der dem Filterelement zugeführte Fluidstrom besser gereinigt ist. Zugleich wird aber die Verstopfungsneigung aufgrund der Verwendung von Zyklonzellen größeren Durchmessers im Vergleich zum Einsatz einheitlicher Zyklonzellen kleineren Durchmessers reduziert. Durch die bessere Ausnutzung des Bauraumes und einer Anpassung der Stirnfläche des Zyklons, wird eine gleichmäßigere Anströmung des nachgeschalteten Filterelements erzielt. Die gleichmäßige Anströmung führt zu einer Standzeitverlängerung des Filterelements.

Die Zusammenfassung mehrerer Einzelzyklone bzw. Zyklonzellen im Filter erfolgt durch die Integration der verschiedenen Zyklonzellen in das Filtergehäuse des Filterelementes, wobei die Zyklonzellen in die Anströmwandung des Filtergehäuses eingepasst sind.

Erfindungsgemäß unterscheidet sich der freie Strömungsquerschnitt der größeren Zyklonzelle um mindestens den Faktor 2 vom freien Strömungsquerschnitt der kleineren Zyklonzelle, wobei die kleinen Zyklonzellen in Nischen zwischen größeren Zyklonzellen bzw. einer größeren Zyklonzelle und der Seitenwand eingebracht sind. Hierdurch wird ein Mindestgrößenunterschied festgelegt, weicher zum einen Vorteile bei der Bauraumausnutzung bietet. Zum andern werden auch im Hinblick auf den Abscheidegrad bzw. das Einsatzspektrum Vorteile erzielt, da über die größeren Zyklone der Luftdurchsatz und über die kleineren Zyklone der Abscheidegrad erhöht wird. Vorteilhaft wird ein Größenunterschied von beispielsweise dem Faktor 3 oder größer zwischen den großen und den kleinen Zyklonzellen angestrebt.

Es können eine Mehrzahl von Zyklonzellen gleichen Durchmessers vorgesehen sein, beispielsweise jeweils zwei Zyklonzellen größeren und zwei Zyklonzellen kleineren Durchmessers, die sich über die Anströmseite des Filters verteilen. Bei einem entsprechenden Größenunterschied können die Zyklonzellen bei einem ovalen Filtergehäuse in der Weise zweckmäßig verteilt werden, dass die beiden größeren Zyklonzellen in Richtung der größeren Erstreckung der Ovalform hintereinander liegend angeordnet werden und die beiden kleineren Zyklonzellen in Querrichtung hierzu.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:

Fig. 1 eine perspektivische Ansicht eines Filters, der axial von einem zu reinigenden Fluid zu durchströmen ist, wobei in das Filtergehäuse des Filters anströmseitig ein Zyklonvorabscheider integriert ist, der aus zwei größeren und zwei kleineren Einzelzyklonen bzw. Zyklonzellen besteht,

Fig. 2 der Filter aus Fig. 1 mit einer Ansicht der Abströmseite,

Fig. 3 eine stirnseitige Ansicht der Anströmseite des Filters,

Fig. 4 eine Schnittdarstellung des Filters gemäß Schnittlinie IV-IV aus Fig. 3,

Fig. 5 eine Schnittdarstellung gemäß Schnittlinie V-V aus Fig. 3.

In den Figuren sind gleiche Bauteile mit gleichen Bezugszeichen versehen.

### Ausführungsform(en) der Erfindung

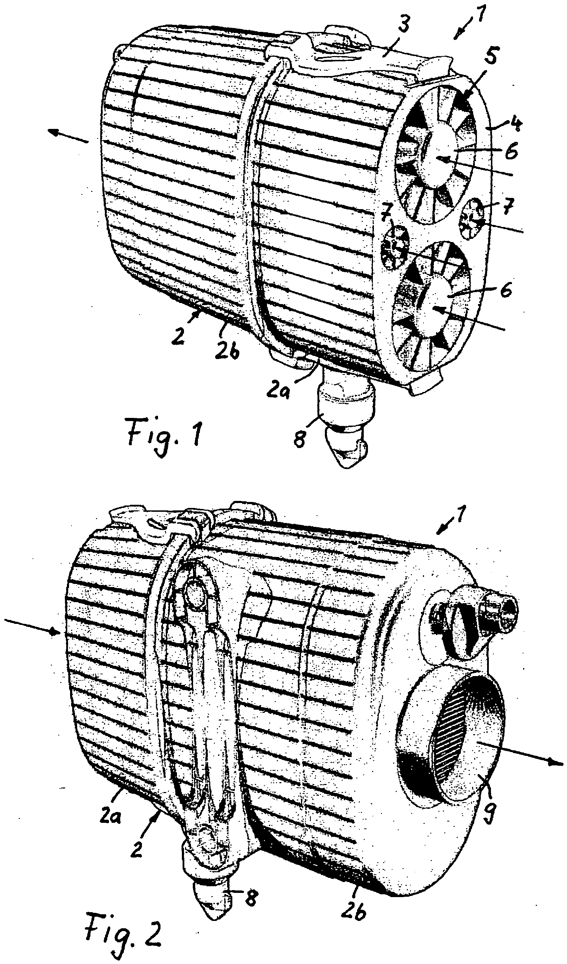

Bei dem in Fig. 1 dargestellten Filter 1 handelt es sich insbesondere um einen Gasfilter, bevorzugt um einen Luftfilter, der im Ansaugtrakt einer Brennkraftmaschine angeordnet wird. Der Filter 1 umfasst ein zweigeteiltes Filtergehäuse 2, dessen Gehäuseteile 2a und 2b über eine lösbare Verschlusseinrichtung 3 miteinander zu verbinden sind. Im Bereich der Anströmseite 4 ist in das Filtergehäuse 2 ein Zyklonvorabscheider 5 integriert, der aus mehreren Zyklonzellen 6 bzw. 7 besteht, über die das heranzuführende Fluid beim Einströmen in das Filtergehäuse 2 geleitet wird. Die Einzelzyklone bzw. Zyklonzellen 6, 7 sind jeweils mit Strömungsschaufeln versehen, über die das axial einströmende Fluid einen Drall aufgeprägt bekommt, wodurch im Fluid enthaltene Schmutzpartikel aufgrund der Fliehkraft im Inneren des Filtergehäuses 2 nach außen getragen werden. Über eine Austragöffnung 8, die sich im vorderen, dem Zyklonvorabscheider 5 zugeordneten Abschnitt des Filtergehäuses 2 befindet, können die abgeschiedenen Schmutzpartikel aus dem Gehäuse entfernt werden.

Im Inneren des Filtergehäuses 2 befindet sich dem Zyklonvorabscheider 5 nachgeordnet das Filterelement, welches von dem im Vorabscheider vorgereinigten Fluid axial zu durchströmen ist. Über eine Abströmöffnung 9 (Fig. 2) auf der dem Zyklonvorabscheider gegenüberliegenden Stirnseite des Filtergehäuses 2 wird das gereinigte Fluid aus dem Filter 1 abgeleitet.

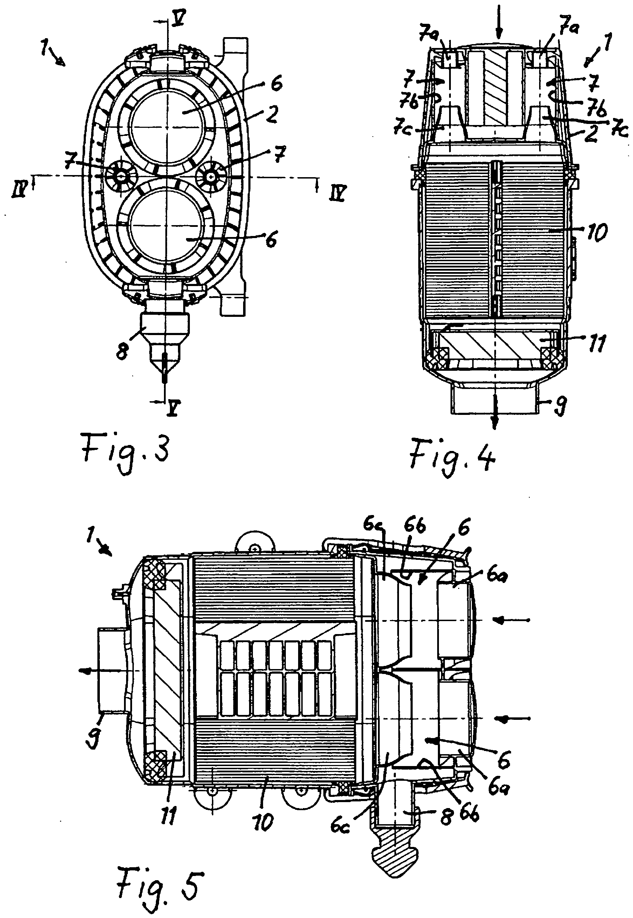

Wie den Fig. 4 und 5 jeweils in Verbindung mit Fig. 3 zu entnehmen, besteht jede Zyklonzelle 6, 7 aus einem Einströmabschnitt 6a bzw. 7a, einem Kanal 6b bzw. 7b und einem Abströmabschnitt 6c bzw. 7c. In dem Kanal 6b bzw. 7b können die schweren Schmutzpartikel abgeschieden werden, die anschließend über die Austragungsöffnung 8 im Filtergehäuse ausgeleitet werden. Das vorgereinigte Fluid wird über die sich diffusorförmig erweiternden Abströmabschnitte 6c bzw. 7c dem Filterelement 10 axial zugeführt, welches sich im mittleren Teil des Filters 1 befindet.

Dem Filterelement 10 ist ein Sekundärelement 11 nachgeschaltet, das von dem das Filterelement 10 passierenden Fluid durchströmt wird. Das Sekundärelement 11 hat die Aufgabe, die Brennkraftmaschine beim Austausch oder einer Beschädigung des Filterelements 10 zu schützen. Anschließend wird das Fluid über die Abströmöffnung 9 aus dem Filter 1 abgeführt.

## Patentansprüche

1. Filter zur Reinigung eines Fluids, mit einem in einem Filtergehäuse (2) angeordneten Filterelement (10), dem ein Zyklonvorabscheider (5) vorgeschaltet ist, über den das Fluid dem Filterelement (10) zuführbar ist, **dadurch gekennzeichnet, dass** der Zyklonvorabscheider (5) mindestens zwei Zyklonzellen (6, 7) unterschiedlichen Durchmessers umfasst, wobei der freie Strömungsquerschnitt der größeren Zyklonzelle (6) mindestens doppelt so groß ist wie der freie Strömungsquerschnitt der kleineren Zyklonzelle (7), wobei die verschiedenen Zyklonzellen (6, 7) in das Filtergehäuse (2) des Filterelements (10) integriert und in die Anströmwandung des Filtergehäuses (2) eingepasst sind, wobei eine Mehrzahl von Zyklonzellen gleichen Durchmessers vorgesehen ist, die sich über die Anströmseite des Filters verteilen, derart, dass die kleineren Zyklonzellen in Nischen zwischen größeren Zyklonzellen oder einer größeren Zyklonzelle und der Seitenwand angebracht sind.

2. Filter nach Anspruch 1, **dadurch gekennzeichnet, dass** die Zyklonzellen (6, 7) in einem Zyklonblock zusammengefasst sind, der dem Filtergehäuse (2) vorgeschaltet ist.

3. Filter nach einem der Ansprüche 1 bis 2, **dadurch gekennzeichnet, dass** jede Zyklonzelle (6, 7) jeweils mindestens einen Strömungskanal (6b, 7b) aufweist, über den das zu filtrierende Fluid dem Filterelement (10) zuführbar ist, wobei die Strömungskanäle (6b, 7b) unterschiedlicher Zyklonzellen (6, 7) verschieden große Durchmesser aufweisen.

4. Filter nach einem der Ansprüche 1 bis 3, **dadurch gekennzeichnet, dass** zwei kleinere und zwei größere Zyklonzellen (6, 7) vorgesehen sind.

5. Filter nach einem der Ansprüche 1 bis 4, **dadurch gekennzeichnet, dass** das Filtergehäuse (2) eine ovale Querschnittsform aufweist.

6. Filter nach einem der Ansprüche 1 bis 5, **dadurch gekennzeichnet, dass** das Filterelement (10) axial zu durchströmen ist und die Zyklonzellen (6, 7) dem Filterelement (10) axial vorgeschaltet sind.

## Claims

1. Filter for cleaning a fluid, with a filter element (10) disposed in a filter housing (2) and which has an upstream cyclone precleaner (5) via which the fluid can be supplied to the filter element (10), **characterized in that** the cyclone precleaner (5) comprises at least two cyclonic cells (6, 7) of different diameter, the free flow cross-section of the larger cyclonic cell (6) being at least twice as big as the free flow cross-section of the smaller cyclonic cell (7), the different cyclonic cells (6, 7) being integrated into the filter housing (2) of the filter element (10) and fit into the inlet wall of the filter housing (2), a plurality of cyclonic cells of the same diameter being provided which are distributed over the inflow side of the filter such that the smaller cyclonic cells are placed in niches between larger cyclonic cells or between a larger cyclonic cell and the sidewall.

2. Filter according to claim 1, **characterized in that** the cyclonic cells (6, 7) are combined in a cyclone block which is arranged upstream of the filter housing (2).

3. Filter according to one of the claims 1 to 2, **characterized in that** each cyclonic cell (6, 7) features at least one flow channel (6b, 7b) over which the fluid to be filtered can be supplied to the filter element (10), the flow channels (6b, 7b) of different cyclonic cells (6, 7) featuring diameters of different sizes.

4. Filter according to one of the claims 1 to 3, **characterized in that** two smaller and two larger cyclonic cells (6, 7) are provided.

5. Filter according to one of the claims 1 to 4, **characterized in that** the filter housing (2) features an oval cross-section shape.

6. Filter according to one of the claims 1 to 5, **characterized in that** the filter element (10) is to be flowed through axially and that the cyclonic cells (6, 7) are arranged axially upstream of the filter element (10).

## Revendications

1. Filtre destiné au nettoyage d'un fluide, avec un élément filtrant (10) disposé dans un boîtier de filtre (2) et précédé d'un séparateur à cyclone (5) par l'intermédiaire duquel le fluide peut être amené à l'élément filtrant (10), **caractérisé en ce que** le séparateur à cyclone (5) comprend au moins deux cellules de cyclone (6, 7) de diamètres différents, la section de flux libre de la grande cellule de cyclone (6) ayant au moins des dimensions doubles de celles de la section de flux libre de la petite cellule de cyclone (7), les différentes cellules de cyclone (6, 7) étant intégrées dans le boîtier de filtre (2) de l'élément filtrant (10) et étant ajustées dans la paroi d'entrée du boîtier de filtre (2), plusieurs cellules de cyclone de même diamètre, lesquelles sont réparties sur le côté d'entrée du filtre de manière à ce que les petites cellules de cyclone soient placées dans des niches entre des grandes cellules de cyclone ou entre une grande cellule de cyclone et la paroi latérale, étant prévues.

2. Filtre selon la revendication 1, **caractérisé en ce que** les cellules de cyclone (6, 7) sont regroupées dans un bloc de cyclone qui est monté en amont du boîtier de filtre (2).

3. Filtre selon l'une des revendications 1 à 2, **caractérisé en ce que** chaque cellule de cyclone (6, 7) présente au moins un canal d'écoulement (6b, 7b) par l'intermédiaire duquel le fluide devant être filtré peut être amené à l'élément filtrant (10), les canaux d'écoulement (6b, 7b) des différentes cellules de cyclone (6, 7) présentant des diamètres différents.

4. Filtre selon l'une des revendications 1 à 3, **caractérisé en ce que** deux petites et deux grandes cellules de cyclone (6, 7) sont prévues.

5. Filtre selon l'une des revendications 1 à 4, **caractérisé en ce que** le boîtier de filtre (2) présente une section de forme ovale.

6. Filtre selon l'une des revendications 1 à 5, **caractérisé en ce que** l'élément filtrant (10) peut être traversé par le fluide en sens axial et que les cellules de cyclone (6, 7) sont montées en sens axial en amont de l'élément filtrant (10).
